# EUROPEAN PATENT SPECIFICATION

(11) **EP 0 448 249 B1**
(45) Date of publication and mention of the grant of the patent: **01.05.1996**
(21) Application number: 91301858.6
(22) Date of filing: 06.03.1991
(51) Int. Cl.: B29C 51/10, B29C 51/26, B29C 45/14

(54) **Method and die for forming a shaped component**
Verfahren und Matrize zum Herstellen eines Formkörpers
Procédé et matrice pour la mise en forme d'un article moulé

(30) Priority: 19.03.1990 US 496524
(43) Date of publication of application: 25.09.1991
(73) Proprietor: ILLINOIS TOOL WORKS INC., Glenview Illinois 60025-5811 (US)
(72) Inventor: Hausler, Ralph, Plymouth, Wisconsin (US); Share, Lawrence, Skokie, Illinois 60074 (US); Khattab, Ghazi, Glenview, Illinois 60025 (US)
(74) Representative: Rackham, Stephen Neil

(56) References cited:
- EP-A- 0 101 095
- EP-A- 0 206 545
- DE-U- 8 816 011
- FR-A- 2 459 116
- US-A- 3 632 252
- US-A- 3 929 952
- DATABASE WPIL Week 8646, Derwent Publications Ltd., London, GB; AN 86302614 & JP-A-61 225 024 (SEKISUI PLASTICS) 6 October 1986

## Description

The present invention relates to a method for producing a thermoformed shape according to the claim 1, to a method of producing a backlit button, according to claim 10 and to a die for thermoforming a sheet material according to claim 14.

Backlit buttons may be used for a control panel or dashboard of an automobile vehicle or other apparatus.

Backlit buttons are presently produced by pressure-forming a plastic material. The button surfaces are painted, screen-printed or otherwise marked with a design or label for indicating the particular function or apparatus associated with the button. The pressure-formed buttons have retained or residual mechanical stresses in the formed part, which stresses subsequently induce fracture in the button rendering the button inoperable or aesthetically unacceptable. Pressure forming of the screen-printed surfaces frequently induces ink adherence problems such as pinholes, fractures and peeling, as the ink and underlying substrate are simultaneously stretched. An overlaid or painted symbol is susceptible to wear and erasure, which is also an undesirable side effect.

A thermoformed or moulded button may be painted and subsequently marked with a laser-forming technique, however, the depth of the part is limited and the laser imprinting process may lead to wear of the symbol. The laser process may be beset with problems of inconsistency and is economically unproven.

EP-A-0,101,095 discloses a device for injecting moulding articles with patterns formed in their surfaces. A thermoformable printed sheet is heated during its travel to a position which locates directly above a female mould and a pressure differential created by blowing air through one set of vents whilst evacuating air through another set of vents causes the softened sheet to collapse into the female mould. A transfer device is then withdrawn to one side and the male mould is brought down to a position so that injection moulding can take place to provide the support for the printed sheet.

JP-A-61-225024 discloses a method of heating and compressing foam sheet using a pair of opposing heating plates provided with recesses. At positions partitioning individual formings, deep recesses are formed in the contact surfaces of the opposing heating plates to reduce heating in those positions.

The present invention relates to a cap thermoformed from a plastic sheet material, which cap is subsequently resin-filled to provide a rigid and stable structure. The process of the illustrated embodiment utilizes a screen-printed plastic or thermoformable sheet with a second surface coating to protect the imprinted sign or label against abrasion or wear on the label surface. Thereafter, the resin moulding is injected into the formed cap or button to provide the back surface and wall thickness to the finished part. In a particular application, a light-pipe is inserted in the cap prior to injection moulding and secured therein by the moulding resin.

The process and apparatus traps the sheet at a predetermined position in the die; elevates the previously screen-printed sheet to an operating temperature; maintains a temperature differential across the sheet; maintains a desired pressure differential across the sheet cross-section; and allows the formed cap to cool to a stripping temperature in the mould to minimize retained thermal stress. Thereafter, the formed sheet is displaced from the mould and a light-pipe may be inserted prior to injection moulding, which injected moulded resin provides stability and support for the formed plastic sheet as well as securing the light-pipe in position above the screened graphic.

A particular example of a plastics component in accordance with this invention will now be described with reference to the accompanying drawings, in which like reference numerals identify like components, and in which:
FIG. 1 is an oblique elevational view of a thermoformed cap and button assembly;
FIG. 2 is a rear view of the thermoformed button in FIG. 1;
FIG. 3 is a perspective view of a die set for thermoforming a plastic sheet;
FIG. 4 is an enlarged view with a partial cutaway of the die set in FIG. 3;
FIG. 5 is a cross-sectional view of a coupled manifold and female die section with a material sheet for thermoforming therebetween;
FIG. 6 is a perspective view in partial section of a thermoformed button cap and resin-filled button;
FIG. 7 is a top view of the thermoformed button in FIG. 6;
FIG. 8 is a sectional view along line 8-8 of FIG. 7; and,
FIG. 9 is a cross-sectional view of the button in FIG. 7 along the line 9-9.

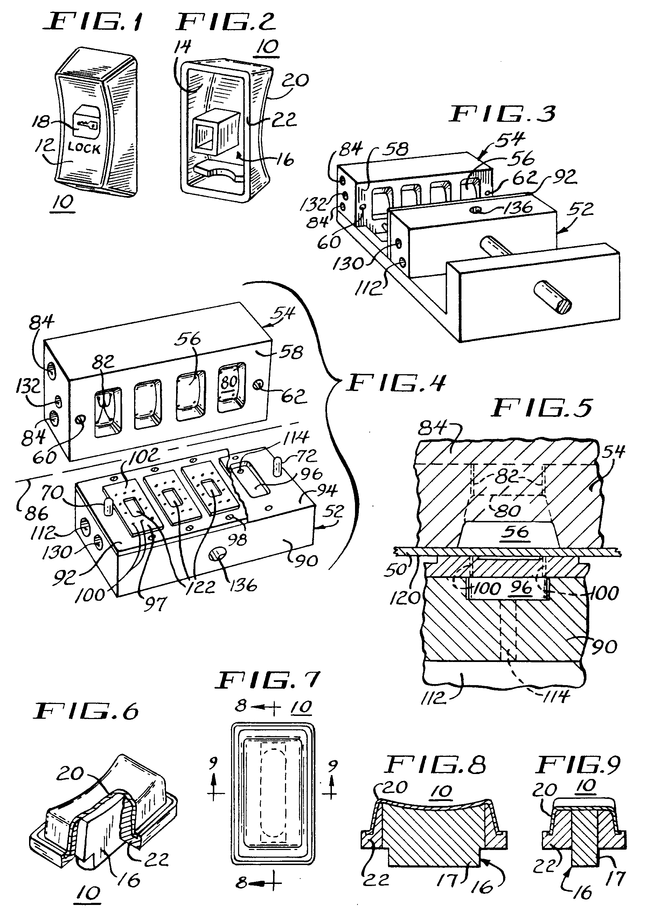

Thermoformed button 10 is illustrated in FIGS. 1 and 2 with a graphic display 18 on top surface 12, and has a generally cup-shaped cavity 14. The structure of button 10 finds utilization in automobile instrument panels, and, in FIG. 2, has light-pipe 16 positioned in cavity 14 to focus and transmit light to imprinted graphic display 18, which light-pipe and light provide illumination for the graphic display. Multi-component button 10 has thermoformed plastic cap 20 overlaid on injection-moulded wall 22, which provides rigidity and stability to the thermoformed cap and also secures light-pipe 16 in cavity 14.

Thermoformed cap 20 for button 10 or other application can be formed to conform to the contours of a desired shape, however, the formation of such a button is limited by operating parameters, especially the draw ratio. The particular shape and form of button 10 is illustrative only and exemplifies a known structure and use for such buttons. The draw ratio is a relationship between the length and depth of the part being formed or drawn. Button 10 in FIG. 6 is shown in partial section with thermoformed cap 20 and moulded resin insert 22 bonded about light-pipe 16. The multiple contours of button 10 and the several surfaces as well as its relative length are illustrated in FIG. 7, and it can be appreciated that cap 10, more particularly, its shape, is a complex configuration. Similarly, the cross-sectional views in FIGS. 8 and 9 illustrate a position for light-pipe 16 and moulded resin 22 under thermoformed cap 20.

In the preferred embodiment, cap 20 is thermoformed by a process utilizing a screen-printed plastic sheet, which is a polyester-polycarbonate alloy. The alloy sheet is provided with a lithographed symbol produced by the screen-printed process, using a multilayered and cross-linked ink compatible with the sheet material. In FIGS. 3-5, sheet 50 is formable between heater block-air manifold 52 and female die segment 54, which female segment 54 includes a plurality of recessed cavities 56 below surface 58. More particularly, female die segment 54 at surface 58 has four juxtaposed cavities 56, shown in the Figures, and locating ports 60 and 62, which are operable to receive mating locating pins 70 and 72 of manifold 52. Surface 58 is generally flat and parallel to transverse axis 86 as are vacuum passage 132 and, first and second fluid ducts 84 in female member 54. Each of cavities 56 is provided with a lower face 80, and a plurality of ports 82 at the several corners of cavities 56 communicating to vacuum passage 132 through female member 54. Passages 84, which are generally parallel to vacuum ducts 132 in female member 54, provide communication for transfer of cooling fluid for member 54.

In FIG. 4, manifold 52 has lower block 90 and facial insert 92, which is mounted on upper surface 94 of block 90. Block 90 includes a plurality of recesses 96 at face 94, which are generally alignable with cavities 56 of female member 54 at mating with manifold 52. Locating pins 70 and 72 protrude or extend from upper face 94 for engagement with locating ports 60 and 62, respectively, in female member 54.

Upper or face plate 92, in the preferred embodiment has a nonstick coating, such as TEFLON, and includes a plurality of raised members 97, which in the illustrated embodiment have generally rectangular shapes and are positionable over cavities 56 at mating engagement of male and female mould members 52, 54. Plate 92 is mountable on upper surface 94 of block 90 and secured thereto by a plurality of screws or bolts 98. Raised members 97 each have a plurality of passages 100, which extend from upper surface 102 of each raised member 97 to the cavity or recess 96 therebelow in face 94. These passages 100 are arranged in a pattern for open communication to recesses 96 in block 90 and, further, are aligned above each of cavities 56 in female block 54. Block 90 includes an air passage 112 parallel to transverse axis 86 in FIG. 4, and extending through block 90 beneath cavities or recesses 96. Second parallel passage 130 in block 90 is both parallel to air passage 112 and transverse axis 86, and provides an opening for heat transfer fluid or other heat source to elevate the temperature of block 90 for heating sheet 50 to an operating temperature. Each of recesses 96 in face 90 is provided with a through-bore 114 communicating between recess 96 and air passage 112 for flow of air or other gas at an elevated pressure into recess 96 and passages 100 in face plate 92 to apply an elevated pressure to the back face 120 of sheet 50.

In the preferred embodiment, face plate 92 and, more specifically, raised members 97, are each provided with a centrally positioned depression 122 generally bounded by passages 100. The depression is generally alignable with the graphic display in sheet back surface 120, and is about 10 mils (0.25mm) below the male-member surface 102. Depression 122 avoids intimate heat contact with sheet 50 and thus heat insulates graphic symbol 18 to prevent variation of the ink on the sheet.

The insulating nature of depression 122 establishes a temperature differential across surface 120 of button 10. The reduced temperature of sheet 50 about graphic symbol 18, which may be about 250°F. to 335°F. (121°C to 168°C), avoids symbol distortion during heating and forming of sheet 12.

In the die set, each of manifold 52 and female member 54 have heating and/or cooling passages. In manifold 52 passage 130 is parallel to air passage 112 and transverse axis 86 and in female member 54 central vacuum passage 132 is parallel to cooling fluid passages 84, which communicate cooling water to maintain the proper temperature of die member 54. The choice of the type of heating or cooling fluid or method is determined by the operator and/or designer of the tools and equipment and does not detract from the performance of either the die or the thermoformed sheet.

The sheet material for thermoforming cap 20 for button 10, or any other specific application, should have properties consistent with thermoforming operations. Button 10 was formed to provide a character identification symbol that would be relatively impervious to erasure or erosion from external sources, thereby providing a sustained life for the symbol. Further, button 10 should not have residual or retained mechanical or thermal stresses, which lead to potential embrittlement, fracture or combinations of other mechanical failures. In addition, cap 20 must be compatible with any mating or overlaid material moulded into its preform. The exemplary thermoformed button of the present invention utilized a polycarbonate polyester alloy sheet, which had been screen-printed with a graphic display in an ordered array for forming of multiple buttons in a single operation. The sheet material of thermoformable material was screen-printed with a cross-linked ink, which provides a visible graphic symbol of a function associated with button 10. These overlaid or screen-printed graphics are provided in multiple layers, which process is familiar to the lithographer, and the cross-link inks utilized have inherent characteristics and properties that lend themselves to continuity and formation with the polyester polycarbonate materials, thereby avoiding separation, pitting and pinholing. Further, the intimate contact between the inks with the cross-link agents and the sheet provide thermal stability to the inks during the forming operation. The screen-printed sheets are also provided with locating ports or points, which are utilized to properly locate the printed graphic in the die set 52, 54 prior to thermoforming. In the Figures, locating holes along the sidewall of the printed screen are matable with locating pins 70, 72 on manifold 52 to secure the screen-printed graphic and plastic sheet in alignment with manifold 52 and female member 54 prior to thermoforming. Thereafter, the sheet is secured between the manifold and female member 52, 54 by the mating engagement of locating pins 70, 72 with locating ports 60, 62 in female member 54. In this fashion the screen-printed graphic and plastic sheet are in alignment with manifold 52 and its related mould cavity 56 for the forming operation.

After clamping sheet 50 between manifold 52 and die 54, the temperature of face plate 92 is elevated to a predetermined temperature which in the case of the appropriate sheet material is at least 335°F. (168°C) but less than 480°F. (249°C) Heat for manifold 52 is supplied through heat passage 130, and is monitored by a temperature probe in probe portal 136 in manifold 52. Plastic sheet 50 is elevated to the predetermined operating temperature, about 350°F. (177°C), which requires about two seconds, as the manifold is generally at elevated temperatures but not necessarily at the operating temperature.

A gas, generally air, is provided in passage 112 of manifold 52 after attainment of the operating temperature, and is applied at approximately 50 to 60 psi (3.3 to 4 bar) in the preferred embodiment. The gas is communicated through passage 112 and port 114 to recess 96 of manifold 52, and subsequently passes through passages 100 for communication to surface 102 of raised members 97, and applies a force to move sheet material 50 into cavity 56 of female member 54. Simultaneously with the application of the elevated pressure in the manifold 52, a vacuum is applied to cavities 56 through passage 132 and ports 82, which sheet 50 is formed under the stress or forming force of the elevated pressure in cavity 96 to the contour of cavity 56 in female member 54. This evacuation of cavity 56 allows free formation of the sheet material with limited resistance from elevated pressures in any of the cavities 56. The pressure level in manifold 52 is applied at approximately 50-60 psi (3.3 to 4 bar), however, it is approximately 25 psi (1.7 bar) in each of the cavities 96, and the vacuum level in female mould cavities 56 is approximately 24 to 25 inches (588-635mm) mercury depression from atmospheric pressure (0.17 bar absolute). The forming time of the button or structure being formed is on the order of 1/2 sec. or less, and the elapsed time for the forming operation at an elevated temperature should be minimized to avoid excess temperature or formation which can lead to distortions in the ink surface including stretching, pitting or cavitation. The thermoforming operation is dependent upon time at temperature and the draw ratio, that is the ratio of the depth of the deepest point of the part versus the length of the draw. The operation should minimize the time of the sheet at the operating temperature versus the area versus the mass, as excess time at temperature may distort the ink or graphic symbol. The specific operating parameters are, therefore, determined, by the operator to correlate to the operating characteristics of his equipment, the sheet material and the structure of the part.

The formed cap 20 is held in mould 54 for a short cooling time, approximately 2 seconds, prior to its removal from the die, which cooling period provides a self-annealing or stress-relieving operation to minimize retained or residual stresses in a deeply formed button, to avoid cracks at the stretched areas of the sheet. Formed buttons 10 are transferred to a moulding operation, specifically an injection-moulding operation in the preferred embodiment, and light-pipe 16 is set in position in illustrated button 10. Cap 20 and light-pipe 16 are cemented in position by the application of an injection-moulded resin, which provides both stability and rigidity to the formed button. The moulding resin is compatible with both the sheet material and the inks to avoid a significant differential in expansion and contraction coefficients, which could lead to separation and cracking during ambient temperature cycling of a button in a vehicle.

Light-pipe 16 in FIGS. 6-9 has an extension 17 protruding from the base of cap 20, which pedestal is utilized to direct light from a source (not shown) to the graphic symbol. The light illuminates the symbol for viewing in the dark and the pedestal is also a structural member for mounting and securing button 10. In the specific illustrated embodiment, light-pipe 16 includes a pedestal stem projecting therefrom for contact with the specific application.

## Claims

1. A method for producing a thermoformed shape in a thermoforming die having a first segment and a second segment, at least one of said segments having a cavity for forming, said method comprising:
1) providing a sheet of thermoformable material having a first side and a second side;
2) positioning and securing said sheet between said die first segment and second segment;
3) heating said sheet;
4) applying a gas at a pressure to one of said first and second sheet sides and reducing the pressure on the other of said first and second sides in proximity to said die cavity to obtain a pressure differential across the sheet cross-section; and,
5) retaining said thermoformed shape in said cavity for a predetermined cooling period,
characterised in that said sheet is heated to a predetermined temperature whilst maintaining a portion of the sheet facing said cavity for forming at a second temperature less than said predetermined temperature to obtain a temperature differential across said sheet.

2. A method for producing a thermoformed shape as claimed in Claim 1, further comprising screen-printing a graphic display on said sheet one side.

3. A method for producing a thermoformed shape as claimed in Claim 2, further comprising providing locating points on said sheet for aligning said graphic display with said die cavity.

4. A method for producing a thermoformed shape as claimed in any preceding claim, further comprising elevating said die temperature to heat said sheet to said elevated temperature.

5. A method for producing a thermoformed shape as claimed in any preceding claim, wherein said thermoformable sheet is a polyester-polycarbonate plastic alloy.

6. A method for producing a thermoformed shape as claimed in Claim 5, further comprising:
screen-printing a graphic display on said sheet one side with an ink, said ink having a cross-link component adherent and compatible with said polyester-polycarbonate sheet.

7. A method for producing a thermoformed shape as claimed in any preceding claim, further comprising:
transferring said thermoformed shape into an injection moulding apparatus;
injecting a moulding resin into said shape at said one side to generally overlay said one side and provide rigidity to said thermoformed shape.

8. A method for producing a thermoformed shape as claimed in any preceding claim, wherein said gas at a pressure on said one sheet side is at a pressure, which pressure is at least 1.7 bar (25 pounds per square inch).

9. A method according to any one of claims 2 to 8, in which said graphic display on said sheet is maintained at said second temperature less than said predetermined temperature to obtain said temperature differential across said sheet.

10. A method of producing a backlit button in a thermoforming die with a female mould and a heater block with a distribution plate, which method comprises:
1) providing a sheet of thermoformable material with a first side and a second side;
2) screen printing a graphic and background colour onto one of said sheet first and second sides;
3) marking said sheet with locating points for alignment of said printed sheet;
4) introducing said sheet into said thermo-forming die;
5) aligning and securing said sheet graphic in said die at said locating points;
6) preheating said sheet;
7) evacuating said female mould to reduce the gas pressure therein for forming the sheet face into said die;
8) elevating the pressure on said sheet at its face opposite said die face;
9) retaining said formed sheet in said die for a predetermined cooling period,
characterised in that the sheet is pre-heated to a predetermined temperature whilst maintaining said graphic display on said sheet at a second temperature less than said predetermined temperature and in that the method further comprises the steps of;
10) transferring said preformed sheet into an injection moulding apparatus;
11) inserting a light pipe into said preformed sheet; and,
12) injection moulding a resin compound in said preformed sheet around said light pipe to secure it in position.

11. A method according to any one of the preceding claims, wherein said die predetermined temperature is greater than 168°C (335°F).

12. A method of producing a backlit button as claimed in Claim 10 or 11, wherein said evacuated pressure in said female die is P₁, and the elevated pressure above said sheet one side is P₂, which is greater than P₁, maintaining the pressure differential between P₁ and P₂ at a predetermined pressure differential.

13. A method of producing a backlit button as claimed in Claim 10, 11 or 12, wherein the screen printing provides a second surface coating to define the graphic, said colour on said sheet provided by an ink system with a cross-linking agent.

14. A die for thermoforming a sheet material, said die comprising:
a first die member and a second die member; one of said first and second members having at least one forming cavity,
characterised by the other of said first and second members having at least one recess; and,
a heating plate having a surface to contact said sheet, said surface alignable with said first member forming cavity and defining a recessed area which does not contact the sheet material to minimize heat transfer between said heating plate and said sheet at said recessed area facing said forming cavity prior to thermoforming.

15. A die for thermoforming a sheet material as claimed in Claim 14, said first die member defining at least one first passage, a second passage, and at least one port communicating between each of said cavities and said first passage, which first passage and port provides communication between said recess and a source of gas at a reduced pressure;
said second member defining a third passage, a fourth passage and at leat one aperture communicating between said fourth passage and said second member depression, which fourth passage is open to communication to a second source of gas at an elevated pressure; and,
said face plate defining a plurality of bores surrounding said recess and communicating between said contact surface and said depressions to provide gas at an elevated pressure to said sheet.

16. A die for thermoforming a sheet material as claimed in Claim 14 or 15, further comprising:
a blind-hole bore in said second member, which bore is open and operable to receive a temperature probe.

17. A die for thermoforming a sheet material as claimed in Claim 14, 15 or 16, wherein said first member defines a first locating port and a second locating port;
said second member defines a first locating pin and a second locating pin, which pins are positionable in sheet locating slots and said first and second locating ports, respectively, to align said sheet and die members.

## Patentansprüche

1. Verfahren zum Herstellen eines warmgeformten Formkörpers in einer warmformenden Matrize, welche ein erstes Segment und ein zweites Segment hat, wobei mindestens eines der Segmente eine Kavität zum Formen hat, und wobei das Verfahren folgende Schritte umfaßt:
1) Bereitstellen einer Platte aus warmformbarem Material, welche eine erste Seite und eine zweite Seite hat;
2) Positionieren und Sichern der Platte zwischen dem ersten Segment und dem zweiten Segment;
3) Erwärmen der Platte;
4) Anwenden eines Gases unter Druck auf eine der ersten und zweiten Plattenseiten und vermindern des Druckes auf die andere der ersten und zweiten Plattenseiten in der Nähe der Matrizenkavität, um eine Druckdifferenz quer über den Platten-Querschnitt zu erhalten; und
5) Zurückhalten des warmgeformten Formkörpers in der Kavität für eine vorbestimmte Zeit lang,
**dadurch gekennzeichnet**, daß
die Platte auf eine vorbestimmte Temperatur erwärmt wird, während ein Teil der Platte, welcher der Kavität zum Formen gegenüberliegt, auf einer zweiten Temperatur gehalten wird, welche niedriger ist als die vorbestimmte Temperatur, um eine Temperaturdifferenz quer über die Platte zu erhalten.

2. Verfahren zum Herstellen eines warmgeformten Formkörpers nach Anspruch 1, welches ferner das Siebdrucken einer graphischen Anzeige auf die eine Seite der Platte umfaßt.

3. Verfahren zum Herstellen eines warmgeformten Formkörpers nach Anspruch 2, welches ferner das Bereitstellen von Positionierungspunkten auf der Platte umfaßt, zum Ausrichten der graphischen Anzeige auf die Matrizenkavität.

4. Verfahren zum Herstellen eines warmgeformten Formkörpers nach einem der vorhergehenden Ansprüche, welches ferner ein Erhöhen der Matrizentemperatur umfaßt, um die Platte auf die erhöhte Temperatur zu erwärmen.

5. Verfahren zum Herstellen eines warmgeformten Formkörpers nach einem der vorhergehenden Ansprüche, wobei die warmformbare Platte eine Polyester-Polycarbonat-Plastik-Legierung ist.

6. Verfahren zum Herstellen eines warmgeformten Formkörpers nach Anspruch 5, welches ferner folgendes umfaßt :
Siebdrucken einer graphischen Anzeige auf die eine Seite der Platte mit einer Farbe, welche eine vernetzte Komponente hat, welche an der Polyester-Polycarbonat-Platte haftet und ihr gegenüber verträglich ist.

7. Verfahren zum Herstellen eines warmgeformten Formkörpers nach einem der vorhergehenden Ansprüche, welches ferner folgendes umfaßt :
Transportieren des warmgeformten Formkörpers in eine Spritzgußvorrichtung;
Einspritzen eines Formharzes in den Formkörper an der einen Seite, um die eine Seite im wesentlichen zu überziehen und um dem warmgeformten Formkörper Steifigkeit zu verleihen.

8. Verfahren zum Herstellen eines warmgeformten Formkörpers nach einem der vorhergehenden Ansprüche, wobei das Gas an der einen Seite der Platte sich unter einem Druck befindet, welcher mindestens 1,7 bar (25 Pfund pro Quadrat-Inch) beträgt.

9. Verfahren nach einem der Ansprüche 2 bis 8, in welchem die graphische Anzeige auf der Platte auf der zweiten Temperatur gehalten wird, welche niedriger als die vorbestimmte Temperatur ist, um die Temperaturdifferenz quer über die Platte zu erhalten.

10. Verfahren zur Herstellung eines hinterleuchteten Knopfes in einer warmformenden Matrize mit einer weiblichen Form und einem Wärmeblock mit einer Verteilerplatte, wobei das Verfahren folgendes umfaßt:
1) Bereitstellen einer Platte aus warmformbarem Material mit einer ersten Seite und einer zweiten Seite;
2) Siebdrucken einer Graphik und einer Hintergrundfarbe auf eine der ersten und zweiten Seiten der Platte;
3) Markieren der Platte mit Positionierungspunkten zum Ausrichten der bedruckten Platte;
4) Einführen der Platte in die warmformende Matrize;
5) Ausrichten und Sichern der Plattengraphik in der Matrize an den Positionierungspunkten;
6) Vorwärmen der Platte;
7) Evakuieren der weiblichen Form, um den Gasdruck darin zu vermindern, zum Formen der Plattenoberfläche in die Matrize hinein;
8) Erhöhen des Drucks auf die Platte an ihrer Oberfläche, welche der Matrizenoberfläche gegenüberliegt;
9) Zurückhalten der geformten Platte in der Matrize während einer vorbestimmten Abkühldauer;
**dadurch gekennzeichnet**, daß
die Platte auf eine vorbestimmte Temperatur vorgewärmt wird, während die graphische Anzeige auf der Platte auf einer zweiten Temperatur gehalten wird, welche niedriger als die vorbestimmte Temperatur ist, und daß das Verfahren ferner folgende Schritte umfaßt:
10) Transportieren der vorgeformten Platte in eine Spritzgußvorrichtung;
11) Einsetzen eines Lichtleiters in die vorgeformte Platte; und
12) Spritzgießen einer Harzkomponente in die vorgeformte Platte um den Lichtleiter herum, um ihn lagezusichern.

11. Verfahren nach einem der vorhergehenden Ansprüche, wobei die vorbestimmte Matrizentemperatur größer als 168° Celsius (335° F) ist.

12. Verfahren zum Herstellen eines hinterleuchteten Knopfes nach Anspruch 10 oder 11, wobei der evakuierte Druck in der weiblichen Matrize P₁ ist, und der erhöhte Druck über der einen Seite der Platte P₂ ist, welcher größer als P₁ ist, wobei die Druckdifferenz zwischen P₁ und P₂ bei einer vorbestimmten Druckdifferenz gehalten wird.

13. Verfahren zum Herstellen eines hinterleuchteten Knopfes nach Anspruch 10, 11 oder 12, wobei das Siebdrucken eine zweite Oberflächenbeschichtung liefert, um die Graphik zu definieren, und die Farbe auf der Platte durch ein Farbsystem mit einem vernetzten Agens gebildet wird.

14. Matrize zum Warmformen eines Plattenmaterials, wobei die Matrize folgendes umfaßt:
ein erstes Matrizenelement und ein zweites Matrizenelement; eines der ersten und zweiten Elemente hat mindestens eine formende Kavität, **dadurch gekennzeichnet**, daß
das andere der ersten und zweiten Elemente mindestens eine Ausnehmung hat; und daß
eine Heizplatte eine Oberfläche zum Kontaktieren der Platte aufweist, wobei die Oberfläche an der formenden Kavität des ersten Elements ausrichtbar ist und einen ausgesparten Bereich definiert, welcher das Plattenmaterial nicht berührt, um den Wärmeübergang zwischen der Heizplatte und der Platte am ausgesparten Bereich, welcher der Kavität vor dem Warmformen gegenüberliegt, zu minimieren.

15. Matrize zum Warmformen eines Plattenmaterials nach Anspruch 14, wobei
das erste Matrizenelement mindestens einen ersten Kanal, einen zweiten Kanal und mindestens eine Öffnung definiert, welche zwischen jeder der Kavitäten und dem ersten Kanal kommuniziert, wobei der erste Kanal und die Öffnung zwischen der Ausnehmung und einer Gasquelle, welche unter reduzierten Druck steht, kommuniziert;
das zweite Element einen dritten Kanal, einen vierten Kanal und mindestens eine Öffnung definiert, welche zwischen dem vierten Kanal und der Vertiefung des zweiten Elements kommuniziert, wobei der vierte Kanal offen ist zur Kommunikation mit einer zweiten Gasquelle, welche unter erhöhtem Druck steht; und
wobei die Frontplatte eine Vielzahl von Bohrungen definiert, welche die Ausnehmung umgeben und welche zwischen der Kontaktoberfläche und den Vertiefungen kommunizieren, um der Platte Gas, welches unter erhöhtem Druck steht, zur Verfügung zu stellen.

16. Matrize zum Warmformen eines Plattenmaterials nach Anspruch 14 oder 15, welche ferner folgendes umfaßt :
eine Sackbohrung im zweiten Element, welche offen ist und eine Temperatursonde aufnehmen kann.

17. Matrize zum Warmformen eines Plattenmaterials nach Anspruch 14, 15 oder 16, wobei
das erste Element eine erste Positionierungsöffnung und eine zweite Positionierungsöffnung definiert;
das zweite Element einen ersten Positionierungsstift und einen zweiten Positionierungsstift definiert, welche in Platten-Positionierausnehmungen und in die ersten und zweiten Positionierungsöffnungen positionierbar sind, um die Platte und die Matrizenlemente auszurichten.

## Revendications

1. Procédé de production d'une pièce thermoformée dans une matrice de thermoformage ayant un premier segment et un second segment, au moins l'un desdits segments ayant une cavité de formage, ledit procédé comprenant :
1) l'utilisation d'une feuille de matière thermoformable ayant un premier côté et un second côté ;
2) le positionnement et la fixation de ladite feuille entre ledit premier segment et ledit second segment de la matrice ;
3) le chauffage de ladite feuille ;
4) l'application d'un gaz sous une pression à l'un desdits premier et second côtés de la feuille et la baisse de la pression sur l'autre desdits premier et second côtés au voisinage de ladite cavité de la matrice afin que l'on obtienne une différence de pression à travers la section transversale de la feuille ; et
5) la retenue de ladite pièce thermoformée dans ladite cavité pendant une période de refroidissement prédéterminée,
caractérisé en ce que ladite feuille est chauffée à une température prédéterminée, tandis qu'est maintenue une partie de la feuille faisant face à ladite cavité pour un formage à une seconde température inférieure à ladite température prédéterminée afin que l'on obtienne une différence de température à travers ladite feuille.

2. Procédé de production d'une pièce thermoformée selon la revendication 1, comprenant en outre l'impression par sérigraphie d'un affichage graphique sur ledit côté de ladite feuille.

3. Procédé de production d'une pièce thermoformée selon la revendication 2, comprenant en outre l'utilisation de points de positionnement sur ladite feuille pour aligner ledit affichage graphique avec ladite cavité de la matrice.

4. Procédé de production d'une pièce thermoformée selon l'une quelconque des revendications précédentes, comprenant en outre l'élévation de ladite température de la matrice pour chauffer ladite feuille jusqu'à ladite température élevée.

5. Procédé de production d'une pièce thermoformée selon l'une quelconque des revendications précédentes, dans lequel ladite feuille thermoformable est en un alliage de matière plastique du type polyester-polycarbonate.

6. Procédé de production d'une pièce thermoformée selon la revendication 5, comprenant en outre :
l'impression par sérigraphie d'un affichage graphique sur ledit côté de ladite feuille avec une encre, ladite encre ayant un constituant de réticulation adhérant à ladite feuille en polyester-carbonate et compatible avec elle.

7. Procédé de production d'une pièce thermoformée selon l'une quelconque des revendications précédentes, comprenant en outre :
le transfert de ladite pièce thermoformée dans un appareil de moulage par injection ;
l'injection d'une résine de moulage dans ladite pièce sur ledit côté pour que la résine recouvre globalement ledit côté et confère de la rigidité à ladite pièce thermoformée.

8. Procédé de production d'une pièce thermoformée selon l'une quelconque des revendications précédentes, dans lequel ledit gaz à une pression sur ledit côté de la feuille est sous une pression, laquelle pression est d'au moins 1,7 bar (25 pounds par square inch).

9. Procédé selon l'une quelconque des revendications 2 à 8, dans lequel ledit affichage graphique sur ladite feuille est maintenu à ladite seconde température inférieure à ladite température prédéterminée pour que l'on obtienne ladite différence de température à travers ladite feuille.

10. Procédé de production d'un bouton éclairé par l'arrière dans une matrice de thermoformage avec un moule femelle, et un bloc chauffant avec une plaque de distribution, lequel procédé comprend :
1) l'utilisation d'une feuille de matière thermoformable ayant un premier côté et un second côté ;
2) l'impression par sérigraphie de signes graphiques et d'une couleur de fond sur l'un desdits premier et second côtés de la feuille ;
3) le marquage de ladite feuille avec des points de positionnement pour l'alignement de ladite feuille imprimée ;
4) l'introduction de ladite feuille dans ladite matrice de thermoformage ;
5) l'alignement et la fixation desdits signes graphiques de la feuille dans ladite matrice auxdits points de positionnement ;
6) le préchauffage de ladite feuille ;
7) l'évacuation dudit moule femelle pour y abaisser la pression de gaz afin de former la face de la feuille à l'intérieur de ladite matrice ;
8) l'élévation de la pression sur ladite feuille, à sa face opposée à ladite face dans la matrice ;
9) la retenue de ladite feuille formée dans ladite matrice pendant une période de refroidissement prédéterminée,
caractérisé en ce que la feuille est préchauffée à une température prédéterminée, tandis que ladite représentation graphique sur ladite feuille est maintenue à une seconde température inférieure à ladite température prédéterminée, et en ce que le procédé comprend en outre les étapes de :
10) transfert de ladite feuille préformée dans un appareil de moulage par injection ;
11) insertion d'un conduit de lumière dans ladite feuille préformée ; et
12) moulage par injection d'un composé de résine dans ladite feuille préformée autour dudit conduit de lumière pour le fixer en position.

11. Procédé selon l'une quelconque des revendications précédentes, dans lequel ladite température prédéterminée de la matrice est supérieure à 168°C (335°F).

12. Procédé de production d'un bouton éclairé par l'arrière selon la revendication 10 ou 11, dans lequel ladite pression d'évacuation dans ladite matrice femelle est P₁, et la pression élevée au-dessus dudit côté de la feuille est P₂, laquelle est supérieure à P₁, maintenant la différence de pression entre P₁ et P₂ à une valeur prédéterminée.

13. Procédé de production d'un bouton éclairé par l'arrière selon la revendication 10, 11 ou 12, dans lequel l'impression par sérigraphie produit un second revêtement de surface pour définir la représentation graphique, ladite couleur sur ladite feuille étant produite par un système en encre avec un agent de réticulation.

14. Matrice pour le thermoformage d'une matière en feuille, ladite matrice comportant :
un premier élément de matrice et un second élément de matrice ; l'un desdits premier et second éléments ayant au moins une cavité de formage,
caractérisée en ce que l'autre desdits premier et second éléments présente au moins un évidement ; et
une plaque chauffante ayant une surface destinée à entrer en contact avec ladite feuille, ladite surface pouvant être alignée avec la cavité de formage dudit premier élément et définissant une zone évidée qui n'est pas en contact avec la matière en feuille pour minimiser la transmission de chaleur entre ladite plaque chauffante et ladite feuille dans ladite zone évidée faisant face à ladite cavité de formage avant le thermoformage.

15. Matrice de thermoformage d'une matière en feuille selon la revendication 14, dans laquelle ledit premier élément de la matrice définit au moins un premier passage, un second passage et au moins un orifice communiquant entre chacune desdites cavités et ledit premier passage, lequel premier passage et l'orifice établissent une communication entre ledit évidement et une source de gaz à pression réduite ;
ledit second élément définissant un troisième passage, un quatrième passage et au moins une ouverture communiquant entre ledit quatrième passage et le creux dudit second élément, lequel quatrième passage est ouvert pour communiquer avec une seconde source de gaz à pression élevée ; et
ladite plaque de face définissant plusieurs alésages entourant ledit évidement et communiquant entre ladite source de contact et lesdits creux pour appliquer un gaz à pression élevée à ladite feuille.

16. Matrice de thermoformage d'une matière en feuille selon la revendication 14 ou 15, comprenant en outre :
un alésage borgne dans ledit second élément, ledit alésage est ouvert et peut être mis en oeuvre pour recevoir une sonde de température.

17. Matrice de thermoformage d'une matière en feuille selon la revendication 14, 15 ou 16, dans laquelle ledit premier élément définit un premier orifice de positionnement et un second orifice de positionnement ;
ledit second élément définit un premier ergot de positionnement et un second ergot de positionnement, lesquels ergots peuvent être positionnés dans des rainures de positionnement de feuille et dans lesdits premier et second orifices de positionnement, respectivement, pour aligner ladite feuille et lesdits éléments de la matrice.
